(19) Europäisches Patentamt
European Patent Office
Office européen des brevets

(11) **EP 3 428 747 A1**

(12) **EUROPÄISCHE PATENTANMELDUNG**

(43) Veröffentlichungstag:
**16.01.2019 Patentblatt 2019/03**

(51) Int Cl.:
**G05B 13/04** *(2006.01)*     **G05B 15/02** *(2006.01)*

(21) Anmeldenummer: **18182907.8**

(22) Anmeldetag: **11.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **11.07.2017   DE 102017115497**

(71) Anmelder: **Liebherr-Transportation Systems GmbH & Co. KG**
**2100 Korneuburg (AT)**

(72) Erfinder:
• **Luchini, Elisabeth**
  **1090 Wien (AT)**
• **Kozek, Martin**
  **1140 Wien (AT)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(54)     **KÜHLSYSTEM MIT MODELLPRÄDIKATIVER REGELUNG**

(57)     Die vorliegende Erfindung betrifft ein Kühlsystem mit modellprädiktiver Regelung, umfassend: ein Kälteaggregat zum Bereitstellen einer Kühlleistung an einen Kühlraum, und eine Regeleinheit zum Ansteuern des Kälteaggregats, wobei die Regeleinheit einen ersten modellprädiktiven Regler (MPC) und einen zweiten modellprädiktiven Regler umfasst, wobei der erste modellprädiktive Regler dazu ausgelegt ist, eine optimale Kühlleistung zu berechnen und diese an den zweiten prädiktiven Regler weiterzuleiten, und der zweite modellprädiktive Regler dazu ausgelegt ist, mindestens eine Stellgröße des Kälteaggregats auf Grundlage der vom ersten modellprädiktiven Regler erhaltenen optimalen Kühlleistung zu optimieren.

## Fig. 1

## Beschreibung

Die vorliegende Erfindung betrifft eine Regelung für ein Kühlsystem unter Verwendung eines modellprädiktiven Ansatzes, insbesondere für ein auf einem LKW angeordneten Kühlraum (sogenannte Trailer).

Der Transport von gekühlten oder tiefgefrorenen Gütern erfordert eine effektive Steuerung der Temperatur innerhalb einer isolierten Kühlkammer (im Englischen: insulated cooling box, ICB). Insbesondere ist dies der Fall, wenn diese der Kühlung typischerweise zuwiderlaufenden Umgebungsbedingungen ausgesetzt sind. In vielen Anwendungen sind Verbindungen zu Wettervorhersagen verfügbar, die eine modellprädiktive Regelung (englisch: model predictive control, MPC) für die Temperatur des Kühlraums (bzw. der Kühlkammer) ermöglichen. Da eine an einen Kühlraum abgebbare Kühlleistung mit Hilfe eines Kälteaggregats bereitgestellt wird, das sowohl über schaltbare als auch kontinuierliche Steuervariablen verfügt, ist unter Anwendung des modellprädiktiven Ansatzes ein gemischt-ganzzahliges Optimierungsproblem zu lösen.

Im Rahmen der vorliegenden Erfindung ist unter Kühlraum aber auch ein Fahrgastraum in einem Transportmittel, wie beispielsweise einem Zug, zu verstehen.

So ist beispielsweise aus der EP 1 802 925 B1 oder der US 2008/0000241 A1 bekannt, einen modellprädiktiven Regler zu verwenden, um eine zukünftige notwendige Kühlleistung eines Kälteaggregats zu bestimmen. Nachteilhaft hieran ist jedoch, dass für das Lösen des gemischt-ganzzahligen Problems (mixed-integer problem) außerordentlich leistungsstarke Computer notwendig sind. Unter anderem trägt hierbei auch der weit in die Zukunft reichende Horizont des gemischt-ganzzahligen Optimierungsproblems bei, der sich bei einem Kühlsystem ergibt. Dies liegt unter anderem daran, dass die Temperatur in einem solchen isolierten Kühlraum, wie er für Trailer verwendet wird, nur sehr langsam veränderbar ist. So dauert es in der Regel mehr als eine Stunde, bis die Temperatur in dem Kühlraum um einen Grad Celsius gesenkt werden kann.

Als Beispiel für das gemischt-ganzzahlige Optimierungsproblem wird ein Kälteaggregat angeführt, dessen Kompressoren an oder ausschaltbar (diskreter, ganzzahliger Zustand) ist und der beispielsweise über ein Ventil oder einen Lüfter verfügt, die jeweils mit einer kontinuierlichen Stellgröße einstellbar sind. Da die Kälteleistung eines solchen Aggregats sowohl von der diskreten als auch der kontinuierlichen Stellgröße abhängen, wird von einem gemischt-ganzzahligen Optimierungsproblem gesprochen.

Die Komplexität, die die Notwendigkeit von besonders leistungsstarken Computern erforderlich macht liegt unter anderem auch darin begründet, dass sich die Zeitkonstanten des Kühlraums und des Kälteaggregats bzw. der Kühlkreisläufe des Kälteaggregats erheblich voneinander unterscheiden. Die Unterschiede liegen dabei in der Größenordnung von im Wesentlichen dem Faktor 100. So befindet sich die Zeitkonstante des Kühlraums typischerweise in dem Bereich um 1,5 Stunden und die des Kälteaggregats bzw. eines Kühlkreislaufs des Kälteaggregats im Bereich von einigen wenigen Minuten.

Weiter trägt dazu das gemischt-ganzzahlige Optimierungsproblem bei, das per se eine hohe Rechenleistung erfordert. Zudem soll eine Optimierung der ausgegebenen Kühlleistung hinsichtlich mehrerer Parameter, wie der Leistungsaufnahme, einer Abnutzung (bspw. des Kälteaggregats), einer Steuerleistungsfähigkeit sowie mehrerer der vorgenannten Ziele optimiert werden.

Es ist also das Ziel der vorliegenden Erfindung, einen modellprädiktiven Regelansatz für ein Kühlsystem vorzusehen, , welches das Gesamtoptimierungsproblem in effizienter zu lösende Teilprobleme zerlegt. Dadurch wären Kühlsysteme verfügbar, die auf eine als vorteilhaft erachtete modellprädiktive Regelung zurückgreifen können und dennoch lange Horizonte bei gegebener Rechenleistung ermöglichen.

Das vorliegende Problem wird mit Hilfe eines Kühlsystems gelöst, das sämtliche Merkmale des Anspruchs 1 umfasst.

Demnach weist das Kühlsystem mit modellprädiktiver Regelung ein Kälteaggregat zum Bereitstellen einer Kühlleistung an einen Kühlraum und eine Regeleinheit zum Ansteuern des Kälteaggregats auf, wobei die Regeleinheit einen ersten modellprädiktiven Regler und einen zweiten modellprädiktiven Regler umfasst. Das Kühlsystem zeichnet sich dadurch aus, dass der erste modellprädiktive Regler dazu ausgelegt ist, eine optimale Kühlleistung zu berechnen, welche die Temperatureinhaltung sicherstellt, und diese an den zweiten modellprädiktiven Regler weiterzuleiten, und der zweite modellprädiktiver Regler dazu ausgelegt ist, mindestens eine Stellgröße des Kälteaggregats auf Grundlage der vom ersten modellprädiktiven Regler erhaltenen optimalen Kühlleistung zu optimieren.

In anderen Worten wird die modellprädiktive Regelung auf zwei modellprädiktive Regler aufgeteilt, die zueinander in einem hierarchischen Verhältnis stehen, wobei der erste Regler in der Hierarchie über dem zweiten Regler steht. Dabei löst der erste modellprädiktive Regler ein Optimierungsproblem hinsichtlich der in den Kühlraum einbringbare Kühlleistung und der zweite modellprädiktive Regler verwendet die vom ersten modellprädiktiven Regler generierte Soll-Kühlleistung um eine oder mehrere Stellgrößen des Kälteaggregats entsprechend zu optimieren. Vorteilhaft hieran ist, dass die zwei gegensätzlichen Optimierungsprobleme (Optimierung der Soll-Kühlleistung und Optimierung der Stellgrößen) in zwei voneinander getrennten Optimierungsvorgängen berechnet werden. So ist es nun beispielsweise möglich, verschiedene Prädiktionshorizonte oder unterschiedliche Abtastraten in den beiden Optimierungsproblemen zu verwenden. Dies kann beispielsweise mittels der erfindungsgemäßen Architektur umgesetzt werden, in der der erste modellprädiktive Regler dazu ausgelegt ist, eine gewünschte Kühlleistung bei einer niedrigen Abtastfrequenz für einen langen Prädiktionshorizont zu berechnen, wohingegen ein gemischt-ganzzahliger modellprädiktiver Regler die aktuelle Kühlleistung bereitstellt und unter Verwendung einer hohen Abtastfrequenz und eines kurzen Prädiktionshorizonts arbeitet.

Nach einer optionalen Modifikation der vorliegenden Erfindung ist es von Vorteil, wenn der erste modellprädiktive Regler ein linearer modellprädiktiver Regler ist. Durch das Vorsehen des ersten modellprädiktiven Reglers als linearer modellprädiktiver Regler ergeben sich vorteilhafte Effekte hinsichtlich der Stabilität des Gesamtsystems. Zudem verringert sich die Komplexität des mit dem ersten modellprädiktiven Regler zu optimierenden Problems, so dass hier weniger Rechenleistung erforderlich ist.

Nach einer weiteren vorteilhaften Ausführungsform der Erfindung ist der zweite modellprädiktive Regler ein gemischt-ganzzahliger modellprädiktiver Regler. Das Ziel des zweiten modellprädiktiven Reglers ist es, die Gesamtbetriebskosten des Kälteaggregats, das einen Kältekreislaufs oder mehrere Kältekreisläufe aufweisen kann, während des Prädiktionshorizonts zu minimieren und dabei gleichzeitig eine große Reihe von System- und Betriebsvorgaben zu erfüllen. So kann eine Optimierung auf eine Störgrößenkompensation, eine exakte Temperaturnachverfolgung, die Minimierung der Energiekosten und/oder eine Abnutzung von Bauteilen des Kälteaggregats erfolgen. Weiter kann vorgesehen sein, dass nach einer Gewichtung der mehreren System- und Betriebsvorgaben das Optimierungsproblem berechnet wird.

Wie bereits eingangs erwähnt, umfasst die gemischt-ganzzahlige Optimierung diskrete und kontinuierliche Stellgrößen des Kälteaggregats, das ein oder mehrere Kältekreisläufe aufweist.

Nach einer Fortbildung der Erfindung reicht ein Prädiktionshorizont der ersten modellprädiktiven Reglers länger in die Zukunft als ein Prädiktionshorizont des zweiten modellprädiktiven Reglers, wobei vorzugsweise das Verhältnis des ersten Prädiktionshorizonts zu dem zweiten Prädiktionshorizont $\geq 5$, bevorzugter Weise $\geq 15$ ist.

Da die von den verschiedenen modellprädiktiven Reglern betrachteten Optimierungsprobleme unterschiedliche Zeitkonstanten aufweisen, ist es von Vorteil, wenn sich dies auch in unterschiedlich langen Prädiktionshorizonten auswirkt. So ist es beispielsweise möglich, dass die mixed-integer (gemischt-ganzzahlige) Problematik des zweiten modellprädiktiven Reglers auf einen sehr viel kürzeren Prädiktionshorizont erstreckt und demnach auch nur eine geringere Rechenleistung benötigt bzw. mit der vorhandenen Rechenleistung ein sicher lösbares Optimierungsproblem zu definieren.

Nach einer weiteren optionalen Fortbildung der Erfindung kann zudem vorgesehen sein, dass ein Regelhorizont des ersten modellprädiktiven Reglers länger in die Zukunft reicht als ein Regelhorizont des zweiten modellprädiktiven Reglers, wobei vorzugsweise das Verhältnis des ersten Regelhorizonts zu dem zweiten Regelhorizont $\geq 3$, bevorzugter Weise $\geq 5$ ist.

Dabei verhält es sich mit dem Regelhorizont ähnlich wie bei dem Prädiktionshorizont der beiden modellprädiktiven Regler. Auch hier ist es von Vorteil, wenn der Regelhorizont des zweiten modellprädiktiven Reglers weniger in die Zukunft reicht als der Regelhorizont des ersten modellprädiktiven Reglers.

Zudem kann in einer bevorzugten Ausführung vorgesehen sein, dass der erste modellprädiktive Regler mit einer ersten Abtastrate arbeitet, die geringer ist als eine zweite Abtastrate, mit der der zweite modellprädiktive Regler arbeitet, wobei vorzugsweise das Verhältnis von zweiter Abtastrate zu erster Abtastrate bei $\geq 5$, bevorzugter Weise bei $\geq 8$ liegt. Dies trägt dem Umstand Rechnung, dass die Zeitkonstanten der Optimierungsprobleme in unterschiedlichen Größenordnungen liegen.

Die optimale Temperatur des Kühlraums ist nur sehr viel träger zu beeinflussen als die Ausgabe einer geänderten Kühlleistung durch das Kälteaggregat. Daher begründen sich die unterschiedlichen Abtastraten, mit denen die beiden modellprädiktiven Regler arbeiten, in dem nur langsam ändernden Umfeld des Kühlraums, bei dem in der Regel Stunden vergehen bis dieser einen Temperaturanstieg von etwa 1° Grad erfahren hat. Im Gegensatz dazu arbeitet das Kühlaggregat sehr viel spontaner und ist in der Lage relativ rasch die gewünschte Kühlkapazität bereitzustellen (Größenordnung: einige wenige Minuten).

So ist es von Vorteil, dass der erste modellprädiktive Regler die Temperatursteuerung des nur langsam-variablen Kühlraums bei einer geringen Abtastrate optimiert, wohingegen der zweite modellprädiktive Regler diese schnelländernden Variablen des Kühlaggregats mit einer schnelleren Abtastrate optimiert. Wenn die beiden in den verschiedenen modellprädiktiven Reglern ausgeführten Optimierungsaufgaben mit unterschiedlichen Abtastraten arbeiten ergibt sich eine Möglichkeit zur Optimierung, die nur geringe Leistungsanforderungen aufweist.

Von Vorteil ist dabei zudem, wenn das Verhältnis von zweiter Abtastrate zu erster Abtastrate eine Ganzzahl ist oder zumindest einen gemeinsamen Teiler aufweist.

Nach einer bevorzugten Variante der vorliegenden Ausführung ist die optimale Kühlleistung des ersten modellprädiktiven Reglers eine Trajektorie und der zweite modellprädiktive Regler ist dazu ausgelegt, die Trajektorie als Referenztrajektorie bei der Optimierung zu verwenden.

Nach einer weiteren optionalen Fortbildung der Erfindung umfasst das Kälteaggregat einen oder mehrere Kühlkreisläufe, von denen jeder eine kontinuierliche Stellgröße und eine schaltbare Stellgröße aufweist. Dabei ist vorgesehen, dass jeder Kühlkreislauf einen Kondensator, einen Verdampfer, ein Expansionsventil und einen oder mehrere Kompressoren enthält, wobei die mehreren Kompressoren vorzugsweise parallel zueinander geschaltet sind. Weiter kann vorgesehen sein, dass ein Kühlkreislauf zudem einen Lüfter aufweist, der in seiner Belüftungsstarke kontinuierlich einstellbar ist.

Somit ist auch von der Erfindung umfasst, dass ein Kühlaggregat mehrere Kühlkreisläufe enthält, von denen jeder mindestens zwei parallel zueinander geschaltete Kompressoren aufweist. Das Ausgeben einer Kühlleistung des Kälteaggregats an den Kühlraum hängt nun von mehreren Stellgrößen ab, die beispielsweise den Zustand eines Kompressors (an/aus), die Stellung des Expansionsventils und/oder die Geschwindigkeit eines Lüfters betreffen.

Ferner kann vorgesehen sein, dass die kontinuierliche Stellgröße eine Ventilposition des Expansionsventils oder eine Geschwindigkeit eines Lüfters ist und die schaltbare Stellgröße ein An- oder Ausschalten eines Kompressors aus dem Kühlkreislauf ist.

Hier formuliert sich auch das gemischt-ganzzahlige Optimierungsproblem des zweiten modellprädiktiven Reglers, der hinsichtlich einer Soll-Kühlleistung eine kontinuierliche und daneben auch eine diskrete Stellgröße berechnen muss.

Zudem kann vorgesehen sein, dass der erste modellprädiktive Regler ferner dazu ausgelegt ist, die optimale Kühlleistung des Kühlraums unter Hinzuziehung einer Soll-Temperatur und einer weiteren Umgebungsbedingung zu berechnen, wobei die weitere Umgebungsbedingung vorzugsweise eine Umgebungstemperatur und/oder eine Luftfeuchtigkeit ist.

Nach einer weiteren Variante der vorliegenden Erfindung ist der zweite modellprädiktive Regler ferner dazu ausgelegt, die Stellgröße unter Hinzuziehung eines weiteren Kriteriums oder mehrerer Kriterien zu optimieren, wobei das weitere Kriterium vorzugsweise eine Temperaturnachverfolgung, Abnutzung des Kälteaggregats, Minimierung der Energiekosten und/oder eine Störgrößenkompensation ist.

Nach einer weiteren optionalen Modifikation der vorliegenden Erfindung umfasst der erste modellprädiktive Regler ein Störmodell, um eine von dem Störmodell abhängige, kompensierende zusätzliche Kühlleistung zu berechnen, wobei der erste modellprädiktive Regler ferner dazu ausgelegt ist, die kompensierende zusätzliche Kühlleistung an den zweiten modellprädiktiven Regler weiterzugeben, wobei vorzugsweise das Störmodell Rückschlüsse auf nicht messbare Störgrößen wie Sonneneinstrahlung, Defekte des Kälteaggregats und/oder innere Wärmequellen zulässt.

Mit Hilfe des Störmodells werden Rückschlüsse auf nicht messbare Störungen gezogen, die nur kumulativ geschätzt werden können. Demnach sind die einzelnen Beiträge des Störmodells in ihrer Größe nicht bekannt, wohl aber die Summe ihrer Wirkungen. Mittels des Störmodells kann auch die für die Kompensation der Störgrößen erforderliche Kühllast berechnet werden und den zweiten modellprädiktiven Regler zur Verfügung gestellt werden. Mit Hilfe des Störmodells ist es also möglich, die Dynamik des ersten modellprädiktiven Reglers zu verbessern.

Nach einer weiteren bevorzugten Ausführung der vorliegenden Erfindung weist der erste modellprädiktive Regler eine Parameteridentifikation auf, um die geschätzten Parameter der Kühllast zu identifizieren, wobei vorzugsweise der erste modellprädiktive Regler dazu ausgelegt ist, die Parameteridentifikation mit Hilfe einer Recursive-Least-Square-Methode auszuführen, die bei einem linearen Modell erster Ordnung des ersten modellprädiktiven Reglers einen Wärmedurchgang und eine totale Wärmekapazität schätzt.

So sind relevante Parameter des Kühlraums der Wärmedurchgang und die Wärmekapazität inklusive der Masse, welche sich in dem Kühlraum befindet. Diese Parameter werden durch eine definierte Methode geschätzt, wobei zeitliche Veränderungen der Parameter zusätzlich mit einem Vergessensfaktor berücksichtigt werden.

Nach einer Modifikation ist es zudem möglich, dass der erste modellprädiktive Regler ferner dazu ausgelegt ist, einen Hypothesentest auszuführen, um sprunghafte Parameteränderungen zu erkennen.

Mit Hilfe eines Hypothesentests kann die richtige Größenordnung eines Parameters schnell gefunden werden, sodass es anschließend möglich ist, den exakten Wert zu identifizieren. Dabei kann unter anderem angenommen werden, dass der Temperaturwert des Kühlraums sich nur sehr langsam ändert und eine sprungförmige Änderung durch die gesamte thermische Kapazität des Kühlraums erzeugt wird.

Weitere Merkmale, Einzelheiten und Vorteile der Erfindung werden anhand der nachfolgenden Figurenbeschreibung ersichtlich.

Dabei zeigen:

Fig. 1:    eine schematische Darstellung zur Visualisierung des Aufbaus der Regeleinheit des erfindungsgemäßen Kühlsystems,

Fig. 2:    eine Prinzipdarstellung einer modellprädiktiven Regelung nach der Erfindung,

Fig. 3:    eine mögliche Struktur des Kühlaggregats mit drei Kühlkreisläufen,

Fig. 4:    eine weitere Ausführungsform der Regeleinheit des erfindungsgemäßen Kühlsystems mit einer Parameteridentifikation und mit einem Beobachter,

Fig. 5:    ein Regelschaltbild einer nach der Erfindung nutzbaren Regelung, und

Fig. 6:    Schaubilder zur Erläuterung des positiven Effekts der Störgrößenaufschaltung.

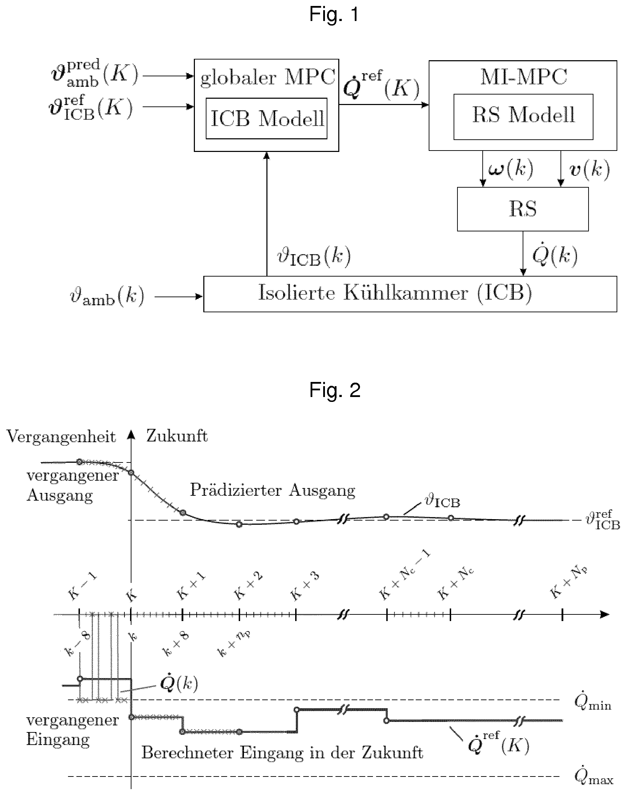

In Fig. 1 erkennt man eine für das erfindungsgemäße Kühlsystem verwendbare Regelung. Man sieht einen ersten modellprädiktiven Regler (globaler MPC) sowie einen zweiten modellprädiktiven Regler (MI-MPC) wobei von dem ersten modellprädiktiven Regler MPC an den zweiten modellprädiktiven Regler MI-MPC eine im ersten modellprädiktiven Regler (globaler MPC) errechnete optimale Kühlleistun $Q^{ref}$ weitergegeben wird.

Die beiden modellprädiktiven Regler stehen in einem hierarchischen Verhältnis zueinander, wobei der erste modellprädikative Regler in hierarchischer Sicht über dem zweiten modellprädiktiven Regler angeordnet ist.

Dabei wird auf Grundlage von Berechnungen des zweiten modellprädiktiven Reglers MI-MPC ein Kühlaggregat RS mit Hilfe von Stellgrößen $\omega$, $v$ angesteuert.

Das Kühlaggregat gibt auf Grundlage dieser Stellgrößen $\omega$, $v$ eine tatsächliche Kühllast $Q$ an einen Kühlraum ICB ab. Da dieser Kühlraum ICB mit der Umgebungstemperatur $\vartheta_{amb}$ zusammenwirkt, stellt sich im Inneren des Kühlraums eine bestimmte Temperatur $\vartheta_{ICB}$ ein. Die Temperatur innerhalb des Kühlraums $\vartheta_{ICB}$ wird neben anderen Faktoren im ersten modellprädiktiven Regler MPC zugeführt.

Der erste modellprädiktive Regler MPC wird in Fig. 1 als globaler MPC bezeichnet. Darüber hinaus umfasst der erste modellprädiktive Regler ein Modell des Kühlraums ICB, das beispielsweise nach einer Ausführung der vorliegenden Erfindung mit Hilfe der nachfolgenden linearen Differenzialgleichung dargestellt ist:

$$mc_p \frac{d\vartheta_{\text{ICB}}}{dt} = -\dot{Q} + kA(\vartheta_{\text{amb}} - \vartheta_{\text{ICB}})$$

Dabei ist $mc_p$ die gesamte Wärmekapazität des Kühlraums ICB und dessen Inhalts, k der Wärmetransferkoeffizient, A der Oberflächenbereich des Kühlraums ICB, $\vartheta_{amb}$ die Umgebungstemperatur, $\vartheta_{ICB}$ die Temperatur des Kühlraums ICB und $Q$ die Kühlleistung.

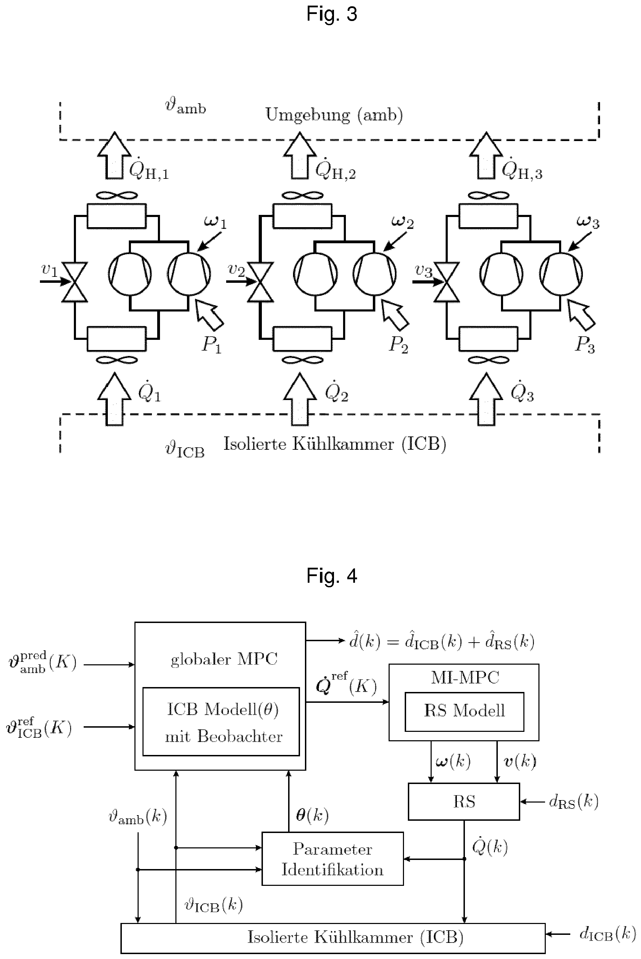

Der zweite modellprädiktive Regler MI-MPC modelliert das Kühlaggregat RS des Kühlsystems. Ein Beispiel für ein erfindungsgemäßes Kühlaggregat RS ist in Fig. 3 dargestellt.

Fig. 3 zeigt ein Kühlaggregat RS, das drei parallele Kühlkreisläufe RC umfasst. Jeder dieser Kühlkreisläufe RC umfasst einen Kondensator, einen Verdampfer, ein elektrisches Expansionsventil und zwei parallel geschaltete Kompressoren. Die Steuervariablen (Stellgrößen) jedes Kühlkreislaufs RC sind der Zustand des Kompressors $\omega$ (an oder aus) und die Position des Ventils $v$ (kontinuierlich einstellbar). Jeder Kühlkreislauf sieht eine Kühlleistung vor, die von der Stellgröße $\omega$ und $v$ abhängig ist. Mathematisch lässt sich dieser Zusammenhang wie folgt beschreiben:

$$\dot{Q}_i = f_1\left(\omega_i, v_i, \vartheta_{\text{amb}}, \vartheta_{\text{ICB}}\right),$$

wobei i der Index für einen der mehreren aktiven Kühlkreisläufe RC ist. Dabei ist es zu beachten, dass $f_1$ als eine algebraische jedoch nicht-lineare Funktion angesehen wird. Weiter ist die Kühlleistung $\dot{Q}$ welche in dem Modell des ersten modellprädiktiven Reglers verwendet wird die Summe aller Kühlleistungen $\dot{Q}_i$ von aktiven Kühlkreisläufen RC und lautet damit (für drei aktive Kühlkreisläufe in dem Kühlaggregat):

$$\dot{Q} = \sum_{i=1}^{3} \dot{Q}_i.$$

Dabei ermöglicht die Redundanz der Kühlkreisläufe RC die Zufuhr derselben Kühlleistung Q unter Verwendung von mehreren unterschiedlichen Kombinationen von Schaltstellungen und kontinuierlichen Variablen, sodass das redundante System zu einer höheren Systemverfügbarkeit bei gleichzeitiger komplexer Regelungsstrategie führt.

Die durch die aktiven Kompressoren aufgenommene elektrische Leistung in einen Kühlkreislauf i wird mittels $P_i = f_2\left(\omega_i, v_i, \vartheta_{amb}, \vartheta_{ICB}\right)$, dargestellt. Dabei wird $f_2$ als eine algebraische nicht-lineare Beziehung angesehen.

Die Dynamik des Kühlraums ICB ist sehr langsam. Abhängig von der gesamten Wärmekapazität $mc_\mathrm{p}$ dauert es typischerweise Stunden zum Aufheizen des Kühlraums ICB um 1°C. Im Gegensatz dazu arbeitet das Kühlaggregat mit schaltbaren Kompressoren bei einer höheren Frequenz, um eine gewünschte Kühlleistung zu erzeugen. Aus diesem Grund wird das Optimierungsproblem in zwei verschiedene Regler aufgeteilt. Der erste modellprädiktive Regler (global MPC) optimiert die Temperatursteuerung des sich nur langsam linear verändernden Kühlraumsystems bei einer geringen Abtastrate (Samples werden mit K bezeichnet). Auf der anderen Seite optimiert ein gemischt-ganzzahliger MPC (MI-MPC) die sich schnell ändernden Eingangsvariablen des Kühlaggregats RS in Anbetracht der Redundanz bei einer schnell Abtastrate (Samples werden mit k bezeichnet). Dabei wird der zweite modellprädiktive Regler (MI-MCP) dazu verwendet, die Leistungsaufnahme und die Abnutzung der Kompressoren zu minimieren und die gewünschte Kühlleistung vorzusehen.

Es ist der Zweck des ersten modellprädiktiven Reglers (global MPC) die Temperatur in dem Kühlraum ICB zu steuern und Störungen zurückzuweisen. Um die Solltemperaturtrajektorie $\vartheta_\mathrm{ICB}^\mathrm{ref}$ zu garantieren berechnet der erste modellprädiktive Regler (global MPC) mit dem zugrunde liegenden linearen Kühlraummodell (vgl. Gleichung 1) sowie der bekannten Störgrößentrajektorie, $\vartheta_{amb}^{pred}$, die optimale Kühlleistungstrajektorie $\dot{Q}^\mathrm{ref}$

Für den zweiten modellprädiktiven Regler ist das Zurverfügungstellen von $\dot{Q}^\mathrm{ref}$ bei fortlaufender Minimierung der Kühlkosten sowie einer Minimierung der Abnutzung ein wichtiges Steuerziel. Der zweite modellprädiktive Regler wird daher zum Optimieren dieser Ziele verwendet, indem die Redundanz der Kühlkreisläufe RC verwendet wird. Dabei empfängt der zweite modellprädiktive Regler das Sollsignal der optimalen Kühlleistungstrajektorie $\dot{Q}^\mathrm{ref}(K)$ von dem übergeordneten globalen MPC (erster modellprädiktiver Regler) und optimiert die schaltbaren Stellgrößen (die den aktiven Kompressoren $\omega$ des Kühlaggregats entsprechen) sowie die kontinuierlichen Stellgrößen (die den Ventilpositionen $v$ der aktiven Kühlkreisläufe RC entsprechen).

Dabei wird nur das erste Steuersample der optimalen Steuersequenz an das Kälteaggregat übermittelt und die sich daraus ergebende Kühlleistung $Q(k)$ wird dazu verwendet die Solltemperatur in dem Kühlraum (ICB) zu erreichen (vgl. Fig. 1). Nachfolgend wird dann der Horizont um ein Sample verschoben und die Optimierung beginnt von vorne.

Fig. 2 zeigt auch die unterschiedlichen Samplingraten bei dem ersten und dem zweiten modellprädiktiven Regler. Der erste (global MPC) arbeitet mit der Samplingzeit $T_\mathrm{MPC}$. Daher ist auch die Trajektorie $\dot{Q}^\mathrm{ref}(K)$ mit dieser Samplingzeit definiert Der zweite modellprädiktive Regler (MI-MPC) erzeugt $Q(k)$ mit der Samplingzeit $T_\mathrm{MI\text{-}MPC}$. Die Samplingzeit $T_\mathrm{MPC}$ ist dabei größer als die Samplingzeit $T_\mathrm{MI\text{-}MPC}$. Anders ausgedrückt ist also die Abtastrate des zweiten modellprädiktiven Reglers größer als diejenige des ersten modellprädiktiven Reglers. Als Beispiel kann die Samplingzeit $T_\mathrm{MPC}$ = 8 Minuten und $T_\mathrm{MI\text{-}MPC}$ = 1 Minute gewählt werden. Hierbei ergibt sich nun eine Multiabtastratenregelung, bei der der hierarchisch höher stehende Regler (erster modellprädiktiver Regler) bei einer niedrigeren Abtastfrequenz läuft. Der Vorhersage und Steuerhorizont des ersten modellprädiktiven Reglers kann gewählt werden als: $N_\mathrm{p}$ = 30 und $N_\mathrm{c}$ = 10. Prädiktionshorizont $n_\mathrm{p}$ und der Regelhorizont $n_\mathrm{c}$ des zweiten modellprädiktiven Reglers können z.B. auf 16 gesetzt werden. Zu beachten ist dabei, dass die Parameter in Verbindung mit dem zweiten modellprädiktiven Regler in k und nicht etwa in K geführt sind, sodass anhand des vorliegenden Beispiels das Verhältnis 8k = K gilt.

Da der Prädiktionshorizont des zweiten modellprädiktiven Reglers MI-MPC sich über eine kürzere Dauer als der Regelhorizont des ersten modellprädiktiven Reglers MPC erstreckt, verwendet der zweite modellprädiktive Regler nur die ersten drei Abtastpunkte von $\dot{Q}^\mathrm{ref}(K)$ zur Optimierung (bspw. $n_\mathrm{p}$=16, Werte des ersten modellprädiktiven Reglers bei k = 0, 8 und 16 bzw. K=0, 1, 2).

Da der Prädiktionshorizont des zweiten modellprädiktiven Reglers kurz ist, sind die Lösungen des Optimierungsproblems mit Hilfe von weniger aufwendiger Soft- und Hardware zu erreichen.

Mit der in Fig. 1 dargestellten Architektur ist es nun möglich, die Solltemperatur in einem Kühlraum ICB zu halten. Dafür steht ein Kälteaggregat RS mit mehreren Kältekreisläufen RC zur Verfügung, welches jeweils mehrere Kompressoren besitzen (vgl. Fig. 3). Jeder dieser Kältekreisläufe RC verfügt auch über ein elektronisches Ventil, wodurch ein hybrides System entsteht. Da sowohl die Solltemperatur des Kühlraums auch die über ein Modell geschätzte Temperaturtrajektorie für die Zukunft zur Verfügung steht, wird die optimale Lösung anhand eines modellprädiktiven Reglers sichergestellt. Um Rechenzeit und Rechenleistung zu sparen, werden dabei zwei modellprädiktive Regler in einer hierarchischen Struktur implementiert. Der erste modellprädiktive Regler stellt sicher, dass die Solltemperatur eingehalten wird und berechnet für den zweiten modellprädiktiven Regler eine Sollkälteleistung. Der zweite modellprädiktive Regler optimiert die Stellgrößen der Komponenten des Kälteaggregats entsprechend, sodass diese unter Einhaltung der notwendigen Kälteleistung auf verschiedene Kriterien hin optimiert werden können. Diese zusätzlichen Kriterien können z. B. minimierte Verschleiß oder elektrische Leistung sein.

Der Vorteil der hintereinandergeschalteten modellprädiktiven Regler liegt an der Performance. Während der rechenaufwendige zweite modellprädiktive Regler mit seiner hohen Abtastrate nur einen sehr kleinen Horizont optimieren muss, kann der erste modellprädiktive Regler ein Optimierungsproblem mit großem Horizont aber kleiner Abtastrate lösen.

Der globale MPC berechnet die optimale Stellgröße mit Hilfe eines Modells der Strecke und einer Kostenfunktion, welche die Temperaturabweichung der ICB zur Soll-Trajektorie und die Änderung der Stellsignale beinhaltet, unter Berücksichtigung von Beschränkungen, wie z.B. die maximale und minimale mögliche Kälteleistung. Eine mögliche Formulierung dieses Optimierungsproblems ist nachfolgend wiedergegeben:

$$J_1 = (\boldsymbol{Y}^{\mathrm{ref}} - \boldsymbol{Y})^T \boldsymbol{Q}_y (\boldsymbol{Y}^{\mathrm{ref}} - \boldsymbol{Y}) + \Delta \boldsymbol{U}^T \boldsymbol{R} \Delta \boldsymbol{U}$$
$$\mathrm{s.t.}$$
$$-\dot{\boldsymbol{Q}}_{\min} \leq -\dot{\boldsymbol{Q}}^{\mathrm{ref}}(K) \leq -\dot{\boldsymbol{Q}}_{\max}$$

Dabei stellen $\boldsymbol{Q}_y$ und $\boldsymbol{R}$ positive halbdefinite Gewichtsmatrizen dar, die für die Einstellung genutzt werden. $\Delta\boldsymbol{U}$ beschreibt die in der Zukunft liegenden Stellgrößenänderungen und $\boldsymbol{Y}^{\mathrm{ref}}$ ist dabei die in der Zukunft liegende Solltemperatur.

$\boldsymbol{Y}^{ref}$ kann dabei dargestellt werden als:

$$\boldsymbol{Y}^{\mathrm{ref}} = \left[\vartheta^{\mathrm{ref}}_{\mathrm{ICB}}(K+1),\ \vartheta^{\mathrm{ref}}_{\mathrm{ICB}}(K+2),\ \cdots,\ \vartheta^{\mathrm{ref}}_{\mathrm{ICB}}(K+N_{\mathrm{P}})\right]^T.$$

Die Stellgrößenänderung $\Delta\boldsymbol{U}$ ist dabei:

$$\Delta U = \left[\Delta U(K),\ \Delta U(K+1),\ \cdots,\ \Delta U(K+N_{\mathrm{c}}-1)\right]^T.$$

Die zeitvariablen Beschränkungen $\dot{Q}_{\min}$ und $\dot{Q}_{max}$ hängen dabei von den Beschränkungen der Kühlkreisläufe RC $\vartheta_{amb}$ und $\vartheta_{ICB}$ ab und beschränken die Steuersequenz auf den umsetzbaren Bereich des zweiten modellprädiktiven Reglers MI-MPC.

Der MI-MPC berechnet anhand der Soll-Kälteleistung Trajektorie vom globalen MPC die optimale Kompressorkombination (diskret) und Ventilstellung (kontinuierlich). Etwaige Latenzzeiten werden dabei berücksichtigt.

Der rechenaufwendige MI-MPC hat eine deutlich höhere Abtastrate als der globale MPC jedoch einen deutlich geringeren Prädiktionshorizont, welches sich positiv auf die Performance auswirkt.

Die Kostenfunktion des MI-MPC sorgt für eine geringe Abweichung der Kälteleistung zur Soll-Kälteleistung, des Weiteren kann noch die elektrische Leistung und der Verschleiß mit den unterschiedlichen Gewichten berücksichtigt werden.

Eine mögliche Formulierung des Optimierungsproblems des zweiten modellprädiktiven Reglers MI-MPC ist nachfolgend wiedergegeben:

$$J_2 = (\dot{\boldsymbol{Q}}^{\mathrm{ref}}(k) - \dot{\boldsymbol{Q}}(k))^T \boldsymbol{\alpha}(\dot{\boldsymbol{Q}}^{\mathrm{ref}}(k) - \dot{\boldsymbol{Q}}(k))$$
$$+ (\boldsymbol{P}\boldsymbol{\beta}\boldsymbol{P} + \boldsymbol{\beta}\boldsymbol{P}) + \gamma\Delta\dot{Q}_\Sigma + \delta S$$
$$\mathrm{s.t.}$$

$$\boldsymbol{v}_{\min} \leq \boldsymbol{v} \leq \boldsymbol{v}_{\max} \qquad\qquad ,$$

wobei $\alpha$, $\beta$, $\gamma$ und $\delta$ positive halbdefinite Gewichte sind, die zur Einstellung benötigt werden. Der erste Term in der obenstehenden Optimierungsformulierung garantiert, dass $\dot{Q}^{\mathrm{ref}}(k)$ so gut wie möglich nachverfolgt wird. Der zweite Term minimiert die Leistungsaufnahme $\boldsymbol{P}$, wobei der dritte Term sicherstellt, dass der Mittelwert von $\dot{Q}(k)$ innerhalb eines großen Samples des ersten modellprädiktiven Reglers MPC $\dot{Q}^{\mathrm{ref}}(k)$ darstellt. Der letzte Term bestraft ein exzessives An- und Ausschalten eines Kompressors, was den Hauptgrund für einen Kompressorverschleiß darstellt.

Fig. 4 zeigt eine Struktur der vorliegenden Erfindung mit Parameteridentifikation und Störgrößenbeobachter. Der erste modellprädiktive Regler beinhaltet ein Modell des Kühlraums ICB, dessen Parameter sich ändern können. Aus diesem Grund wird eine Parameteridentifikation durchgeführt und der erste modellprädiktive Regler mit den neuen Parametern aktualisiert.

Relevante Parameter des Kühlraums ICB sind der Wärmedurchgang und die Wärmekapazität inkl. Masse, welche sich in dem Kühlraum ICB befindet inklusive wirksame Anteile von dem Kühlraum ICB. Diese Parameter werden durch eine definierte Methode geschätzt. Die Methode kann durch Lösen der Kühlraum-Gleichung oder durch Verwendung eines RLS-Algorithmus (Rekursive Least Squares-Algorithmus) die Parameter schätzen. Zeitliche Veränderungen der Parameter können zusätzlich mit einem Vergessensfaktor berücksichtigt werden (Weighted-RLS). Sprunghafte Parameteränderungen werden durch einen Hypothesentest früh erkannt und unterstützen eine schnelle Parameteridentifikation. Durch den Hypothesentest kann die richtige Größenordnung von dem Parameter schnell gefunden werden und anschließend mit der Gleichung der exakte Wert identifiziert werden. Es ist auch möglich die Gleichung so umzuformulieren, dass nur mehr ein Parameter zu schätzen notwendig ist, bei diesem Verfahren wird angenommen, dass der k-Wert des Kühlraums ICB sich nur sehr langsam ändert und eine sprungförmige Änderung durch den $mc_p$-Wert erzeugt wird. Anschließend, nachdem der $mc_p$-Wert genau genug identifiziert wurde, werden wieder beide Parameter weiter geschätzt.

Um ein korrektes Ergebnis zu erhalten wird die Streckengleichung mit zero-order hold diskretisiert. Die dabei entstandenen Parameter werden identifiziert und anschließend auf die originalen Parameter zurückgerechnet.

$$y(k) = \overbrace{e^{-\frac{kA}{mc_p}T}}^{\theta_1} y(k-1) + \overbrace{\frac{1}{kA}\left(1 - e^{-\frac{kA}{mc_p}T}\right)}^{\theta_2} u(k-1) + \overbrace{\left(1 - e^{-\frac{kA}{mc_p}T}\right)}^{\theta_1} z(k-1)$$

$$k = \frac{(1-\theta_1)}{A\theta_2} \qquad mc_p = \frac{(1-\theta_1)T}{\theta_2 \ln(\theta_1)}$$

.

Ferner kann auch vorgesehen sein, dass der erste modellprädiktive Regler ein Störmodell aufweist, wodurch etwaige Fehler (z.B. Sonneneinstrahlung, innere Wärmequelle oder defekter Kältekreislauf) erkannt werden. Diese nicht gemessenen Störungen können allerdings nur kumulativ erfasst werden, d.h. nicht in ihren einzelnen Beiträgen, sondern nur als Summenwirkung. Dies kann einerseits für eine Fehlerdetektion genutzt werden, andererseits durch eine Störgrößenaufschaltung in das Modell miteinbezogen werden, wodurch ein schnelles Ausregeln der Störung sichergestellt werden kann. Störgrößenschätzung und Parameteridentifikation können auch in einem einzigen Beobachter realisiert werden, was zu einem nicht linearen Beobachter führt, der jedoch bei sehr langsam ändernden Parametern stabil bleibt.

Das Modell der Strecke im MPC ist um ein Störmodel erweitert worden. Dabei werden sowohl messbare Störungen (Außentemperatur) als auch nicht gemessene Störungen (Strahlung, Defekte, innere Wärmequellen) erfasst. Diese nicht gemessenen Störungen können abgeschätzt werden, und die Abweichung zwischen gemessenen und prädizierten Ausgang kann damit vorhergesagt werden. Die geschätzte Störgröße kann anschließend verwendet werden um auf die Sonneneinstrahlung oder Fehler im System zurückzuschließen. Um weitere Performance in der Regelung zu bekommen kann diese auch als Vorsteuerung in der Regelung berücksichtigt werden.

Der globale MPC berechnet seine optimale Lösung alle 8min. Der Prädiktionshorizont beträgt z.B. 240min kann jedoch sehr einfach verringert/verlängert werden.

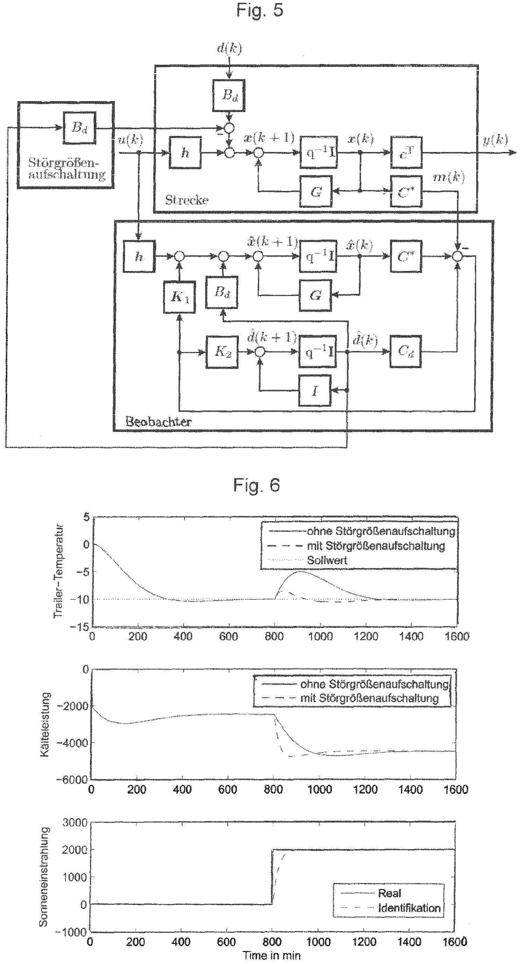

Fig. 5 zeigt ein Prinzipbild mit Störgrößenbeobachtung nach einer Ausführung der vorliegenden Erfindung. Der Schätzwert des Zustandsvektors $\hat{x}(k + 1)$ setzt sich dabei wie folgt zusammen:

$$\hat{x}(k+1) = (G + K_1 C^*)\hat{x}(k) + hu(k) + (B_d + K_1 C_d)\hat{d}(k) - K_1 C^* x(k)$$

$$\hat{d}(k+1) = K_2 C^* \hat{x}(k) + (I + K_2 C_d)\hat{d}(k) - K_2 C^* x(k).$$

Fig. 6 zeigt dabei die Effekte der Störgrößenaufschaltung anhand einer plötzlich auftretenden Störgröße. Man sieht, dass mit Störgrößenaufschaltung die Temperatur des Kühlraums (hier ein Trailer eines Kühllasters) sehr viel näher am Sollwert bleibt als ohne Störgrößenaufschaltung, vgl. oberstes Diagramm der Fig. 6. Die von Kälteaggregat ausgegebene Kälteleistung wird schneller auf die geänderte Sonneneinstrahlung angepasst, so dass die Temperatur in dem Kühlraum ICB um einen sehr viel geringeren Betrag ansteigt.

**Patentansprüche**

1. Kühlsystem mit modellprädiktiver Regelung, umfassend:

   ein Kälteaggregat (RS) zum Bereitstellen einer Kühlleistung (Q) an einen Kühlraum (ICB), und
   eine Regeleinheit zum Ansteuern des Kälteaggregats (RS), wobei
   die Regeleinheit einen ersten modellprädiktiven Regler (MPC) und einen zweiten modellprädiktiven Regler (MI-MPC) umfasst,
   **dadurch gekennzeichnet, dass**
   der erste modellprädiktive Regler (MPC) dazu ausgelegt ist, eine optimale Kühlleistung ($\dot{Q}^{\text{ref}}$) zu berechnen und diese an den zweiten prädiktiven Regler (MI-MPC) weiterzuleiten, und
   der zweite modellprädiktive Regler (MI-MPC) dazu ausgelegt ist, mindestens eine Stellgröße $(\omega, v)$ des Kälteaggregats (RS) auf Grundlage der vom ersten modellprädiktiven Regler (MPC) erhaltenen optimalen Kühlleistung ($\dot{Q}^{\text{ref}}$) zu optimieren.

2. Kühlsystem nach Anspruch 1, wobei der erste modellprädiktive Regler (MPC) ein linearer modellprädiktiver Regler (MPC) ist.

3. Kühlsystem nach einem der vorhergehenden Ansprüche, wobei der zweite modellprädiktive Regler (MI-MPC) ein gemischt-ganzzahliger modellprädiktiver Regler (MI-MPC) ist.

4. Kühlsystem nach einem der vorhergehenden Ansprüche, wobei ein Prädiktionshorizont ($N_p$) des ersten modellprädiktiven Reglers (MPC) länger in die Zukunft reicht als ein Prädiktionshorizont ($n_p$) des zweiten modellprädiktiven Reglers (MI-MPC), vorzugsweise ist das Verhältnis des ersten Prädiktionshorizonts ($N_p$) zu dem zweiten Prädiktionshorizont ($n_p$) gleich oder größer 5, vorzugsweise gleich oder größer 15.

5. Kühlsystem nach einem der vorhergehenden Ansprüche, wobei ein Regelhorizont ($N_c$) des ersten modellprädiktiven Reglers (MPC) länger in die Zukunft reicht als ein Regelhorizont ($n_c$) des zweiten modellprädiktiven Reglers (MI-MPC), vorzugsweise ist das Verhältnis des ersten Regelhorizonts ($N_c$) zu dem zweiten Regelhorizont ($n_c$) gleich oder größer 3, vorzugsweise gleich oder größer 5.

6. Kühlsystem nach einem der vorhergehenden Ansprüche, wobei der erste modellprädiktive Regler (MPC) mit einer ersten Abtastrate (K) arbeitet, die geringer ist als eine zweite Abtastrate (k), mit der der zweite modellprädiktive Regler (MI-MPC) arbeitet, vorzugsweise liegt das Verhältnis von zweiter Abtastrate (k) zu erster Abtastrate (K) bei gleich oder größer 5, vorzugsweise bei gleich oder größer 8.

7. Kühlsystem nach Anspruch 6, wobei das Verhältnis von zweiter Abtastrate (k) zu erster Abtastrate (K) eine Ganzzahl ist.

8. Kühlsystem nach einem der vorhergehenden Ansprüche, wobei
   die optimale Kühlleistung ($\dot{Q}^{ref}$) des ersten modellprädiktiven Reglers (MPC) eine Trajektorie ist, und
   der zweite modellprädiktive Regler (MI-MPC) dazu ausgelegt ist, die Trajektorie als Referenz-Trajektorie bei der Optimierung zu verwenden.

9. Kühlsystem nach einem der vorhergehenden Ansprüche, wobei
   das Kälteaggregat (RS) einen oder mehrere Kühlkreisläufe (RC) umfasst, von denen jeder eine kontinuierliche Stellgröße (v) und eine schaltbare Stellgröße ($\omega$) aufweist, und
   jeder Kühlkreislauf (RC) einen Kondensator, einen Verdampfer, ein Expansionsventil und einen oder mehrere Kompressoren enthält, die vorzugsweise parallel zueinander geschaltet sind.

10. Kühlsystem nach Anspruch 9, wobei die kontinuierliche Stellgröße (v) eine Ventilposition des Expansionsventils oder eine Geschwindigkeit eines Lüfters ist und die schaltbare Stellgröße ($\omega$) ein An- oder Ausschalten eines Kompressors aus dem Kühlkreislauf (RC) ist.

11. Kühlsystem nach einem der vorhergehenden Ansprüche, wobei der erste modellprädiktive Regler (MPC) ferner dazu ausgelegt ist, die optimale Kühlleistung ($\dot{Q}^{\text{ref}}$) des Kühlraums unter Hinzuziehung einer Solltemperatur $\left(\vartheta_{\text{ICB}}^{\text{ref}}\right)$

und einer weiteren Umgebungsbedingung $\left(\vartheta_{\mathrm{amb}}^{\mathrm{pred}}\right)$ zu berechnen, wobei die weitere Umgebungsbedingung vorzugsweise eine Umgebungstemperatur und/oder eine Luftfeuchtigkeit ist.

12. Kühlsystem nach einem der vorhergehenden Ansprüche, wobei der zweite modellprädiktive Regler (MI-MPC) ferner dazu ausgelegt ist, die Stellgröße ($\omega$, $v$) unter Hinzuziehung eines weiteren Kriteriums zu optimieren, wobei das weitere Kriterium vorzugsweise eine Temperaturnachverfolgung, Abnutzung, Minimierung der Energiekosten und/oder eine Störgrößenkompensation ist.

13. Kühlsystem nach einem der vorhergehenden Ansprüche, wobei der erste modellprädiktive Regler (MPC) ein Störmodell umfasst, um eine von dem Störmodell abhängige, kompensierende zusätzliche Kühlleistung zu berechnen, wobei der erste modellprädiktive Regler (MPC) ferner dazu ausgelegt ist, die kompensierende zusätzliche Kühlleistung an den zweiten modellprädiktiven Regler (MI-MPC) weiterzugeben, wobei vorzugsweise das Störmodell Rückschlüsse auf nicht messbare Störgrößen wie Sonneneinstrahlung, Defekte des Kälteaggregats (RS) und/oder innere Wärmequellen zulässt.

14. Kühlsystem nach einem der vorhergehenden Ansprüche, wobei der erste modellprädiktive Regler (MPC) eine Parameteridentifikation aufweist, um die geschätzten Parameter der Kühllast zu identifizieren, wobei vorzugsweise der erste modellprädiktive Regler (MPC) dazu ausgelegt ist, die Parameteridentifikation mit Hilfe einer Rekursive-Least-Squares-Methode auszuführen, die bei einem linearen Modell erster Ordnung einen Wärmedurchgang und eine totale Wärmekapazität schätzt.

15. Kühlsystem nach Anspruch 14, wobei der erste modellprädiktive Regler (MPC) ferner dazu ausgelegt ist, einen Hypothesentest auszuführen, um sprunghafte Parameteränderungen zu erkennen.

Fig. 1

$\vartheta_{\text{amb}}^{\text{pred}}(K)$ ⟶ globaler MPC $\dot{Q}^{\text{ref}}(K)$ MI-MPC

$\vartheta_{\text{ICB}}^{\text{ref}}(K)$ ⟶ ICB Modell ⟶ RS Modell

$\omega(k)$ $v(k)$

RS

$\dot{Q}(k)$

$\vartheta_{\text{ICB}}(k)$

$\vartheta_{\text{amb}}(k)$ ⟶ Isolierte Kühlkammer (ICB)

Fig. 2

Vergangenheit    Zukunft

vergangener Ausgang

Prädizierter Ausgang    $\vartheta_{\text{ICB}}$

$\vartheta_{\text{ICB}}^{\text{ref}}$

$K-1$    $K$    $K+1$    $K+2$    $K+3$    $K+N_c-1$    $K+N_c$    $K+N_p$

$k-8$    $k$    $k+8$    $k+n_p$

$\dot{Q}(k)$    $\dot{Q}_{\text{min}}$

vergangener Eingang

Berechneter Eingang in der Zukunft    $\dot{Q}^{\text{ref}}(K)$

$\dot{Q}_{\text{max}}$

## Fig. 3

$\vartheta_{amb}$   Umgebung (amb)

$\dot{Q}_{H,1}$   $\dot{Q}_{H,2}$   $\dot{Q}_{H,3}$

$\omega_1$   $\omega_2$   $\omega_3$

$v_1$   $v_2$   $v_3$

$P_1$   $P_2$   $P_3$

$\dot{Q}_1$   $\dot{Q}_2$   $\dot{Q}_3$

$\vartheta_{ICB}$   Isolierte Kühlkammer (ICB)

## Fig. 4

$\vartheta_{amb}^{pred}(K)$

$\vartheta_{ICB}^{ref}(K)$

globaler MPC

ICB Modell($\theta$) mit Beobachter

$\hat{d}(k) = \hat{d}_{ICB}(k) + \hat{d}_{RS}(k)$

$\dot{Q}^{ref}(K)$

MI-MPC

RS Modell

$\omega(k)$   $v(k)$

RS   $d_{RS}(k)$

$\vartheta_{amb}(k)$   $\theta(k)$

Parameter Identifikation

$\dot{Q}(k)$

$\vartheta_{ICB}(k)$

Isolierte Kühlkammer (ICB)   $d_{ICB}(k)$

Fig. 5

Fig. 6

Europäisches
Patentamt

European
Patent Office

Office européen
des brevets

# EUROPÄISCHER RECHERCHENBERICHT

Nummer der Anmeldung

EP 18 18 2907

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/148651 A1 (UNIV NANYANG TECH [SG]; UNIV CALIFORNIA [US]) 22. September 2016 (2016-09-22) * Abbildungen 1B,2 * * Absatz [0062] - Absatz [0066] * * Absatz [0070] * * Absatz [0073] - Absatz [0076] * * Absatz [0084] * * Absatz [0091] * * Absatz [0100] - Absatz [0101] * * Absatz [0152] * ----- | 1-15 | INV. G05B13/04 G05B15/02 |
| A | PICASSO B ET AL: "An MPC approach to the design of two-layer hierarchical control systems", AUTOMATICA, PERGAMON, AMSTERDAM, NL, Bd. 46, Nr. 5, 1. Mai 2010 (2010-05-01), Seiten 823-831, XP027006840, ISSN: 0005-1098 [gefunden am 2010-03-17] * Seite 824 * ----- | 4-7 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 10. Dezember 2018 | Antonopoulos, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 2907

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2018

| Im Recherchenbericht angeführtes Patentdokument | Datum der Veröffentlichung | Mitglied(er) der Patentfamilie | Datum der Veröffentlichung |
|---|---|---|---|
| WO 2016148651 A1 | 22-09-2016 | SG 11201706843R A<br>WO 2016148651 A1 | 28-09-2017<br>22-09-2016 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1802925 B1

- US 20080000241 A1